# EUROPÄISCHE PATENTSCHRIFT

(11) **EP 1 882 625 B1**
(45) Veröffentlichungstag und Bekanntmachung des Hinweises auf die Patenterteilung: **11.02.2009**
(21) Anmeldenummer: 07011430.1
(22) Anmeldetag: 12.06.2007
(51) Int. Cl.: B62D 25/08, B62D 27/02, B62D 29/00

(54) **Fahrzeugkarosserie mit einer durch Kathodentauchlackierung beschichteten Aluminiumdruckgussfederstütze**
Car bodywork with aluminium diecast spring support coated with cataphoretic paint
Carrosserie de véhicule dotée d'un support de ressort en fonte d'aluminium peinte par cataphorèse

(30) Priorität: 28.07.2006 DE 102006034976
(43) Veröffentlichungstag der Anmeldung: 30.01.2008
(73) Patentinhaber: Bayerische MotorenWerke Aktiengesellschaft, 80809 München (DE)
(72) Erfinder: Roehrl, Sabine, 82110 Germering (DE); Woisetschläger, Helmut, 84032 Altdorf (DE); Rogers, Sloan, Greer, SC 29650 (US)

(56) Entgegenhaltungen:
- EP-B- 1 545 960
- DE-A- 10 349 180
- DE-A-6102004 004 38
- DE-A-9102004 043 33
- US-A- 5 456 517

## Beschreibung

Die vorliegende Erfindung betrifft eine Fahrzeugkarosserie gemäß dem Oberbegriff des Patentanspruches 1.

Eine derartige Fahrzeugkarosserie ist aus der DE 10 2004 004 386 A1 bekannt.

Die 10 2004 043 339 A1 beschreibt eine Federbeinabstützung, bestehend aus einem Gussteil und einem Blechformteil.

Fahrzeuge der aktuellen 5er Baureihe von BMW weisen eine Karosserie mit einem aus Aluminium hergestellten Vorderbau auf, bei dem auch die Federstützen, d. h. die Aufnahmen für die Federbeine aus Aluminium hergestellt sind. Genauer gesagt handelt sich hierbei um Aluminiumdruckgussfederstützen.

Möchte man eine derartige Aluminiumdruckgussfederstütze in einen Karosserievorderbau aus Stahl einbauen, müssen Korrosionsschutzmaßnahmen getroffen werden.

Aufgabe der Erfindung ist es, eine Fahrzeugkarosserie in Mischbauweise zu schaffen, die eine hohe Korrosionsbeständigkeit aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Fahrzeugkarosserie mit einer ersten Karosseriekomponente, die aus einem Leichtmetallmaterial hergestellt ist und die mittels einer Kleberschicht mit einer zweiten Karosseriekomponente verbunden ist, die aus einem anderen Material hergestellt ist.

Der Kern der Erfindung besteht darin, die Oberfläche der ersten Karosseriekomponente mit einer Beschichtung zu versehen, die in einem Kathodentauchlackierungsprozess auf die Oberfläche der ersten Karosseriekomponente aufgebracht worden ist. Die Kleberschicht ist unmittelbar auf die Beschichtung aufgebracht. Versuche haben ergeben, dass eine Klebeverbindung, welche unmittelbar auf die KTL-Beschichtung der ersten Karosseriekomponenten aufgebracht ist, die im Fahrzeugbau bestehenden Festigkeitsanforderungen erfüllt.

Durch die Kathodentauchlackierung wird das Risiko von Kontaktkorrosion im Verbindungsbereich zwischen den beiden Karosseriekomponenten vermieden. Grundsätzlich könnte anstatt einer KTL-Beschichtung die Oberfläche des ersten Karosserieteils auch passiviert werden. Eine KTL-Beschichtung ist jedoch kostengünstiger. Ein weiterer Vorteil ist darin zu sehen, dass die KTL-Beschichtung weniger anfällig für Verschmutzung, z. B. beim Transport bzw. Einbau, ist, wodurch sich beim anschließenden Klebeprozess eine hohe Prozesssicherheit erreichen lässt.

Nach der Erfindung sind in die erste Karosseriekomponente Einpresselemente wie z. b. Schraubbolzen etc. eingepresst, die anschließend zusammen mit der ersten Karosseriekomponente im Kathodentauchlackierungsprozess beschichtet werden.

Bei der zweiten Karosseriekomponente kann es sich um eine bzw. mehrere aus Stahlblech hergestellten Karosseriekomponenten handeln. Außer durch die Kleberschicht können die beiden Karosseriekomponenten auch durch andere zusätzliche Verbindungstechniken, wie z. B. Stanznieten miteinander verbunden werden.

## Patentansprüche

1. Fahrzeugkarosserie, mit einer ersten Karosseriekomponente, die aus einem Leichtmetallmaterial hergestellt ist und mittels einer Kleberschicht mit einer zweiten Karosseriekomponente verbunden ist, die aus einem anderen Material hergestellt ist, als die erste Karosseriekomponente, wobei eine Oberfläche der ersten Karosseriekomponente mit einer Beschichtung versehen ist, die in einem Kathodentauchlackierungsprozess auf die Oberfläche aufgebracht worden ist und die Kleberschicht unmittelbar auf die Beschichtung aufgebracht ist.
**dadurch gekennzeichnet,**
**dass** die erste Karosseriekomponente eine Federbeinstütze ist,
**dass** die erste Karosseriekomponente ein Aluminiumdruckgussteil ist, und
**dass** in die erste Karosseriekomponente mindestens ein Einpresselement eingepresst ist, das in dem Kathodentauchlackierungsprozess ebenfalls mit der Beschichtung versehen wurde.

2. Fahrzeugkarosserie nach Anspruch 1,
**dadurch gekennzeichnet, dass** die zweite Karosseriekomponente ein Stahlteil ist.

## Claims

1. A vehicle body comprising a first component made of a light-metal material and connected by a layer of adhesive to a second component made of a different material from the first component, wherein a surface of the first component is given a coating applied to the surface in a cathode dip-coating process and the layer of adhesive is applied directly to the coating,
**characterised in that**
the first body component is a spring-leg support,
the second component is an aluminium die-cast part and
at least one element is impressed into the first component and is likewise given the coating in the cathode dip-coating process.

2. A body according to claim 1,
**characterised in that** the second component is a steel part.

## Revendications

1. Carrosserie de véhicule comportant un premier composant de carrosserie fabriqué en un métal léger et relié par une couche de colle à un second composant de carrosserie réalisé en un autre matériau que le premier composant de carrosserie,
la surface supérieure du premier composant de carrosserie étant muni d'un revêtement appliqué sur cette surface supérieure par un procédé de peinture par immersion et par cataphorèse et la couche de colle est appliquée directement sur le revêtement,
**caractérisée en ce que**
le premier composant de carrosserie est un appui de jambe de ressort, le premier composant de carrosserie est une pièce en fonte d'aluminium, et
au moins un élément d'enfoncement est enfoncé dans le premier composant de carrosserie, et cet élément reçoit également d'un revêtement pendant l'application du procédé de peinture par cataphorèse.

2. Carrosserie de véhicule selon la revendication 1,
**caractérisée en ce que**
le second composant de carrosserie est une pièce en acier.
